# EUROPÄISCHE PATENTANMELDUNG

(11) **EP 2 982 561 A2**
(43) Veröffentlichungstag der Anmeldung: **10.02.2016**
(21) Anmeldenummer: 15177818.0
(22) Anmeldetag: 22.07.2015
(51) Int. Cl.: B60W 30/06

(54) **VERFAHREN ZUM BESTIMMEN EINER PARKFLÄCHE ZUM ABSTELLEN EINES KRAFTFAHRZEUGS, FAHRERASSISTENZSYSTEM UND KRAFTFAHRZEUG**

(30) Priorität: 04.08.2014 DE 102014111011
(71) Anmelder: Valeo Schalter und Sensoren GmbH, 74321 Bietigheim-Bissingen (DE)
(72) Erfinder: Ginglinger, Laurent, 68420 Eguisheim (FR); Geiger, Tobias, 74321 Bietigheim-Bissingen (DE)

(57) **Zusammenfassung**

Die Erfindung betrifft ein Verfahren zum Bestimmen einer Parkfläche (12) zum Abstellen eines Kraftfahrzeugs (1) in einem Umgebungsbereich (9) des Kraftfahrzeugs (1), wobei Sensordaten von dem Umgebungsbereich (9) mittels zumindest einer Sensoreinrichtung (3) des Kraftfahrzeugs (1) bereitgestellt werden. Anhand der Sensordaten wird mittels einer Auswerteeinrichtung (10) des Kraftfahrzeugs (1) zumindest ein Objekt (13) in dem Umgebungsbereich (9) erfasst sowie eine räumliche Anordnung des zumindest einen Objekts (13) bezüglich des Kraftfahrzeugs (1) ermittelt. Weiterhin wird eine Position (17) und/oder einer Ausrichtung (18) der Parkfläche (12) anhand der ermittelten räumlichen Anordnung des zumindest einen Objekts (13) mittels der Auswerteeinrichtung (10) bestimmt, wobei eine Mittellinie (14) einer an die Parkfläche (12) angrenzenden Fahrbahn (15) erfasst wird und die bestimmte Position (17) und/oder die bestimmte Ausrichtung (18) der Parkfläche (12) in Abhängigkeit von der erfassten Mittellinie (14) angepasst wird.

## Beschreibung

Die Erfindung betrifft ein Verfahren zum Bestimmen einer Parkfläche zum Abstellen eines Kraftfahrzeugs in einem Umgebungsbereich des Kraftfahrzeugs. Dabei werden Sensordaten von dem Umgebungsbereich mittels zumindest einer Sensoreinrichtung des Kraftfahrzeugs bereitgestellt. Weiterhin wird zumindest ein Objekt in dem Umgebungsbereich erfasst sowie eine räumliche Anordnung des zumindest einen Objekts bezüglich des Kraftfahrzeugs anhand der Sensordaten mittels einer Auswerteeinrichtung des Kraftfahrzeugs ermittelt. Zudem werden eine Position und/oder eine Ausrichtung der Parkfläche anhand der ermittelten räumlichen Anordnung des zumindest einen Objekts mittels der Auswerteeinrichtung bestimmt. Die Erfindung betrifft außerdem ein Fahrerassistenzsystem für ein Kraftfahrzeug sowie ein Kraftfahrzeug mit einem solchen Fahrerassistenzsystem.

Verfahren zum Bestimmen einer Parkfläche, die zum Abstellen eines Kraftfahrzeugs in einem Umgebungsbereich des Kraftfahrzeugs dient, sind aus dem Stand der Technik bekannt. So wird beispielsweise in der DE 10 2009 006 335 A1 ein Verfahren beschrieben, um einem Fahrer Unterstützung bei der Auswahl eines geeigneten Parkplatzes zu bieten. Hierzu wird anhand einer Form der links und rechts des Kraftfahrzeugs befindlichen Fahrbahnmarkierungen ermittelt, ob es sich bei dem Parkplatz beziehungsweise der Parkfläche um Längs-, Quer- oder Schrägparklücken handelt.

Weiterhin ist aus der DE 10 2007 047 362 A1 ein Verfahren zur Steuerung eines Parkassistenzsystems bekannt, bei welchem Markierungen auf der Fahrbahn und im Bereich einer Abstellfläche für das Kraftfahrzeug erfasst und analysiert werden. Die Markierungen eines Parkraums können hinzugezogen werden, um eine entsprechende Ausrichtung und Bahnsteuerung des Kraftfahrzeugs vorzunehmen.

Des Weiteren ist aus der DE 10 2009 008 113 A1 ein Verfahren zum Detektieren einer Zielparkposition unter Verwendung von zwei Referenzpunkten bekannt. Bei dem Verfahren werden Parkplatzmarkierungen und Zielmuster von Parkplatzmarkierungen genutzt, um eine Zielparkposition zu ermitteln. Das Zielmuster kann beispielsweise T-förmig sein.

Es ist Aufgabe der vorliegenden Erfindung, ein Verfahren, ein Fahrerassistenzsystem sowie ein Kraftfahrzeug bereitzustellen, mit welchem beziehungsweise bei welchem eine Parkfläche besonders präzise bestimmt werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst.

Bei einem erfindungsgemäßen Verfahren zum Bestimmen einer Parkfläche zum Abstellen eines Kraftfahrzeugs in einem Umgebungsbereich des Kraftfahrzeugs werden Sensordaten von dem Umgebungsbereich mittels zumindest einer Sensoreinrichtung des Kraftfahrzeugs bereitgestellt und zumindest ein Objekt in dem Umgebungsbereich erfasst sowie eine räumliche Anordnung des zumindest einen Objekts bezüglich des Kraftfahrzeugs ermittelt, wobei das Erfassen und das Ermitteln anhand der Sensordaten mittels einer Auswerteeinrichtung des Kraftfahrzeugs erfolgt. Weiterhin werden eine Position und/oder eine Ausrichtung der Parkfläche anhand der ermittelten räumlichen Anordnung des zumindest einen Objekts mittels der Auswerteeinrichtung bestimmt. Erfindungsgemäß ist vorgesehen, dass eine Mittellinie einer an die Parkfläche angrenzenden Fahrbahn erfasst wird und die bestimmte Position und/oder die bestimmte Ausrichtung der Parkfläche in Abhängigkeit von der erfassten Mittellinie angepasst wird.

Durch das erfindungsgemäße Verfahren wird es möglich, dass die Position und/oder die Ausrichtung der Parkfläche besonders präzise bestimmt werden, weil das Bestimmen abhängig von der erfassten Mittellinie erfolgt. Die Parkfläche stellt insbesondere die Fläche dar, auf der das Kraftfahrzeug geparkt bzw. abgestellt werden soll. Im Gegensatz zum Stand der Technik kann also nicht nur eine nicht näher beschriebene Fahrbahnmarkierung und/oder eine Parkflächenmarkierung zum Bestimmen der Parkfläche genutzt werden, sondern es ist vorgesehen, dass die Mittellinie der an die Parkfläche angrenzenden Fahrbahn beziehungsweise Straße zum Anpassen der Position und/oder der Ausrichtung der Parkfläche genutzt wird. Es wird also zum einen die Mittellinie genutzt, und zum anderen kann die Position und/oder die Ausrichtung der Parkfläche angepasst beziehungsweise nachjustiert werden. Dabei können zunächst eine grobe Position und/oder eine grobe Ausrichtung der Parkfläche bestimmt werden und die Position und/oder die Orientierung können anschließend anhand der erfassten Mittellinie angepasst werden. Mit dem Begriff der Ausrichtung wird eine Orientierung der Parkfläche bezeichnet. Das Anpassen bezieht sich also auf die bestimmte Position und/oder die bestimmte Ausrichtung der Parkfläche.

Vorliegend wird die räumlichen Anordnung des zumindest einen Objekts bezüglich des Kraftfahrzeugs bestimmt. Die räumliche Anordnung kann insbesondere eine Ausrichtung des Objekts bezüglich des Kraftfahrzeugs beschreiben. Beispielsweise kann die Ausrichtung des Objekts zu einer Längsachse und/oder eine Querachse des Kraftfahrzeugs bestimmt werden. Anhand der räumlichen Anordnung des zumindest einen Objekts kann die Position und/oder die Ausrichtung der Parkfläche bestimmt werden, so dass eine Aussage darüber getroffen werden kann, ob es sich bei der Parkfläche um eine Parkfläche zum Längsparken oder eine Parkfläche zum Querparken handelt. Das Objekt kann beispielsweise ein geparktes bzw. abgestelltes Fahrzeug sein. Das Objekt kann auch eine Kontur des geparkten Fahrzeugs oder eine Kontur eines Bereichs des geparkten Fahrzeugs sein. Beispielsweise kann das Objekt ein Nummernschild, ein Rad und/oder ein Karosseriebauteil, insbesondere ein Radkasten, des geparkten Fahrzeugs sein. Das Objekt kann auch eine Parkflächenmarkierung sein. Weiterhin kann das Objekt ein Bordstein oder eine Wand sein.

Die Mittellinie ist dabei insbesondere eine Längsmarkierung im Straßenbau beziehungsweise eine Fahrbahnmarkierung, welche zwei Fahrstreifen der Fahrbahn voneinander trennt. Der Mittelstreifen kann in unterschiedlichen Farben vorliegen, so ist eine gebräuchliche Farbe Weiß. Die Mittellinie kann aber auch eine andere Farbe aufweisen. Die Mittellinie kann beispielsweise als durchgehender Strich oder als unterbrochener Strich oder als Doppelstrich mit sowohl einem durchgehenden Strich als auch einem unterbrochenen Strich oder einem Doppelstrich mit zwei durchgehenden Strichen oder einem Doppelstrich mit zwei unterbrochenen Strichen ausgebildet sein.

Insbesondere ist vorgesehen, dass eine relative Lage der Mittellinie zu der Parkfläche ermittelt wird und die bestimmte Position und/oder die bestimmte Ausrichtung der Parkfläche anhand der ermittelten relativen Lage angepasst wird. Dies bedeutet, dass die Position beziehungsweise und/oder die Ausrichtung der Parkfläche anhand der relativen Lage der Mittellinie angepasst beziehungsweise verbessert werden. Dabei kann die Position und die Ausrichtung der Mittellinie erfasst werden. Beispielsweise kann eine Haupterstreckungsrichtung der Mittellinie erfasst werden. Der Vorteil ist also eine besonders präzise angepasste Position und/oder angepasste Ausrichtung der Parkfläche.

Weiterhin ist vorgesehen, dass die räumliche Anordnung des zumindest einen Objekts und/oder die Mittellinie kontinuierlich während eines Einparkvorgangs des Kraftfahrzeugs in die Parkfläche erfasst werden. Das bedeutet, dass das Erfassen des zumindest einen Objekts und/oder der Mittellinie nicht nur einmal zu Beginn des Parkvorgangs erfolgt, sondern kontinuierlich während der Bewegung des Kraftfahrzeugs fortgesetzt wird. Vorteilhaft daran ist, dass das zumindest eine Objekt und/oder die Mittellinie somit besonders präzise erfasst werden können, weil die Erfassung in verschiedenen Abständen zu dem zumindest einen Objekt und/oder der Mittellinie erfolgen kann. Weiterhin kann das Erfassen von verschiedenen Erfassungspositionen erfolgen. Die verschiedenen Sichtpositionen und/oder die verschiedenen Abstände zu dem zumindest einen Objekt und/oder der Mittellinie führen dazu, dass die Sensordaten, welche das zumindest eine Objekt und/oder die Mittellinie beschreiben, besonders präzise und/oder zuverlässig bereitgestellt werden können.

In einer weiteren Ausführungsform ist vorgesehen, dass das Bestimmen der Position und/oder der Ausrichtung der Parkfläche kontinuierlich während eines Einparkvorgangs des Kraftfahrzeugs in die Parkfläche angepasst wird. Es kann also vorgesehen sein, dass die Position beziehungsweise die bestimmte Position und/oder die Ausrichtung beziehungsweise die bestimmte Ausrichtung kontinuierlich während des Einparkvorgangs verbessert beziehungsweise nachjustiert werden. Der Vorteil liegt darin, dass mit Fortschreiten des Einparkvorgangs der für die Parkfläche vorgesehene Bereich im der Umgebung des Kraftfahrzeugs genauer erfasst und berücksichtigt werden können. Die Position und/oder die Ausrichtung der Parkfläche werden also kontinuierlich bis zum Erreichen einer Zielposition des Kraftfahrzeugs auf der Parkfläche beziehungsweise dem Abstellen des Kraftfahrzeugs auf der Parkfläche angepasst beziehungsweise verbessert.

Insbesondere ist vorgesehen, dass eine Fahrtrajektorie, entlang welcher das Kraftfahrzeug beim Einparken in die Parkfläche bewegt wird, bestimmt wird und die bestimmte Fahrtrajektorie abhängig von der angepassten Position und/oder der angepassten Ausrichtung angepasst werden. Es kann also vorgesehen sein, dass zusätzlich zu der angepassten Position und/oder der angepassten Ausrichtung die Fahrtrajektorie des Kraftfahrzeugs dementsprechend angepasst wird. Dies ist insbesondere vorteilhaft im Fall eines autonomen Einparkens oder semi-autonomen Einparkens. So kann also beispielsweise die Fahrtrajektorie automatisch an die anhand der Mittellinie angepasste beziehungsweise verbesserte Position und/oder angepasste beziehungsweise verbesserte Ausrichtung der Parkfläche angepasst werden.

Vorzugsweise ist vorgesehen, dass die Parkfläche zum Längsparken des Kraftfahrzeugs dient und die Ausrichtung der Parkfläche derart angepasst wird, dass eine Haupterstreckungsrichtung der Parkfläche im Wesentlichen parallel zu der erfassten Mittellinie angeordnet ist. Die Haupterstreckungsrichtung der Parkfläche ist im Fall des abgestellten Kraftfahrzeugs im Wesentlichen deckungsgleich mit einer Fahrzeuglängsachse des Kraftfahrzeugs, welche sich von einem Heck des Kraftfahrzeugs zu einer Front des Kraftfahrzeugs erstreckt. Die Haupterstreckungsrichtung der Parkfläche ist also eine Symmetrieachse der Parkfläche, welche sich mit den beiden kürzeren Seiten der rechteckigen Parkfläche schneidet. Vorteilhaft an der Ausrichtung beziehungsweise der Orientierung der Längsparkfläche an der erfassten Mittellinie ist, dass die Parkfläche zum Längsparken beziehungsweise die Längsparkfläche besonders präzise anhand der Mittellinie ausgerichtet werden kann. Somit kann für die Ausrichtung der Parkfläche zum Längsparken ein Lot von der Haupterstreckungsrichtung auf die Mittellinie gewählt werden, um die Ausrichtung besonders präzise anzupassen.

Weiterhin ist insbesondere vorgesehen, dass die Parkfläche zum Querparken des Kraftfahrzeugs dient und die Ausrichtung der Parkfläche derart angepasst wird, dass eine Haupterstreckungsrichtung der Parkfläche im Wesentlichen senkrecht zu der erfassten Mittellinie angeordnet ist. Die Haupterstreckungsrichtung der Parkfläche zum Querparken erstreckt sich analog zu der Haupterstreckungsrichtung der Parkfläche zum Längsparken, das bedeutet, das abgestellte Kraftfahrzeug bringt die Fahrzeuglängsachse im Wesentlichen in einen deckungsgleichen Zustand mit der Haupterstreckungsrichtung. Somit kann die Ausrichtung der Parkfläche zum Querparken besonders präzise bestimmt werden, weil sich die Verlängerung der Haupterstreckungsrichtung in Richtung der Mittellinie mit der Mittellinie in einem Winkel von 90° schneidet.

Weiterhin wird die Position der Parkfläche bevorzugt in Abhängigkeit von einem vorbestimmten Abstand zu der erfassten Mittellinie angepasst. Das bedeutet, der vorbestimmte Abstand beziehungsweise ein lateraler Abstand der Parkfläche bezüglich der Mittellinie und/oder der Fahrbahn kann anhand der Mittellinie besonders präzise bestimmt werden. Durch eine Anpassung der Fahrtrajektorie des Kraftfahrzeugs kann also bestimmt werden, wie weit das Kraftfahrzeug in die Parkfläche hinein fährt. Es kann also verhindert werden, dass das Kraftfahrzeug zu weit in die Fahrbahn hineinragt, was einem zu geringen lateralen Abstand entspricht, oder zu weit in die Parkfläche hinein oder über die Parkfläche hinaus bewegt wird, was einem zu großen lateralen Abstand entspricht. Beide Positionen, also der zu geringer lateraler Abstand und der zu großer lateraler Abstand, sind nachteilig. Bei dem zu geringen lateralen Abstand steht das Kraftfahrzeug zu weit auf der Fahrbahn, was andere Verkehrsteilnehmer behindern kann und zu einer Verkehrsgefährdung führen kann. In dem Fall, dass das Kraftfahrzeug zu weit in der Parkfläche hinein bewegt wird beziehungsweise der laterale Abstand zu der Mittellinie zu groß ist beziehungsweise der vorbestimmte Abstand überschritten wird, kann es abhängig von der jeweiligen Parkfläche zu Schäden an dem Kraftfahrzeug kommen oder ebenfalls zur Behinderung von anderen Verkehrsteilnehmern.

Vorzugsweise ist vorgesehen, dass als die Mittellinie eine auf die Fahrbahn aufgebrachte Fahrbahnmarkierung, welche eine unterbrochene Linie oder eine durchgezogene Linie darstellt, erfasst wird. Die Mittellinie ist also eine Fahrbahnmarkierung beziehungsweise eine Straßenmarkierung beziehungsweise eine Bodenmarkierung, welche einer farblichen Kennzeichnung auf einer Oberfläche von Verkehrsflächen des Straßenverkehrs entspricht. Die Fahrbahnmarkierung gehört zu einer Straßenausstattung und dient der Verkehrsführung, der Kennzeichnung verschiedener Verkehrsflächen und als Verkehrszeichen. Die Mittellinie kann dabei beispielsweise mittels einer Dispersionsfarbe, einer Heißspritzplastik, einer Heißplastik, einer Kaltplastik, einer Folie oder Markierungsknöpfen aufgebracht sein. So eignen sich die Markierungsknöpfe besonders bei einer Pflasterfläche als Fahrbahn. Die unterschiedlichen Ausgestaltungen der Mittellinie können beispielsweise als Referenz in einer Speichereinheit hinterlegt sein. Wenn die Mittellinie mit der Sensoreinrichtung des Kraftfahrzeugs erfasst wird, kann ein Vergleich mit den gespeicherten Referenz-Mittellinien durchgeführt werden. Somit kann die Mittellinie zuverlässig erfasst werden.

Insbesondere ist vorgesehen, dass als die Mittellinie eine auf die Fahrbahn aufgebrachte Fahrbahnmarkierung, welche zumindest zwei Fahrspuren der Fahrbahn voneinander trennt, erfasst wird. Die Fahrspur beziehungsweise ein Fahrstreifen kennzeichnet die Fläche, welche dem Kraftfahrzeug für die Fahrt in eine Richtung zur Verfügung steht. Zur Trennung der zwei Fahrspuren kann die Mittellinie genutzt werden. Vorteilhaft ist also, dass die Mittellinie häufig auf der Fahrbahn beziehungsweise der Straße vorkommt und somit ein zuverlässiger Bezugspunkt für das Anpassen der Position und/oder der Ausrichtung der Parkfläche bereitgestellt werden kann.

In einer weiteren Ausführungsform wird eine seitliche Begrenzungslinie der an die Parkfläche angrenzenden Fahrbahn erfasst und die Position und/oder die Ausrichtung der Parkfläche zusätzlich abhängig von der erfassten Begrenzungslinie angepasst. Die seitliche Begrenzungslinie ist beispielsweise eine Fahrbahnbegrenzung beziehungsweise eine Randlinie, die als durchgehender Strich, aber auch als unterbrochener Strich, den Rand der Fahrbahn kennzeichnet. Häufig wird auf die seitliche Begrenzungslinie verzichtet, wenn ein Bordstein vorhanden ist. Die seitliche Begrenzungslinie kann das Anpassen der Position und/oder der Ausrichtung der Parkfläche aber weiterhin verbessern. Somit kann anhand der seitlichen Begrenzungslinie die Position und/oder die Ausrichtung der Parkfläche zusätzlich präziser angepasst werden. Üblicherweise verlaufen die seitliche Begrenzungslinie und die Mittellinie parallel zueinander.

Ein erfindungsgemäßes Fahrerassistenzsystem für ein Kraftfahrzeug umfasst zumindest eine Sensoreinrichtung und eine Auswerteeinrichtung, welche dazu ausgelegt ist, ein erfindungsgemäßes Verfahren durchzuführen.

Die Sensoreinrichtung umfasst beispielsweise einen Ultraschallsensor und/oder eine Kamera und/oder einen Laserscanner und/oder einen Radarsensor. Der Ultraschallsensor kann dafür vorgesehen sein, um dreidimensionale Objekte, welche die Parkfläche begrenzen und in dem Umgebungsbereich sind, zu erfassen. Vorzugsweise eignen sich ebenfalls der Laserscanner und/oder der Radarsensor besonders zur Erfassung von den dreidimensionalen Objekten. Die Kamera kann beispielsweise vorgesehen sein, um die Mittellinie zu erfassen. Jedoch ist die Sensoreinrichtung nicht auf die gerade eben erwähnte Kombination beschränkt. Mit der Kamera können ebenfalls die dreidimensionalen Objekte erfasst werden, und besondere Ausführungsformen des Ultraschallsensors und/oder des Laserscanners und/oder des Radarsensors können auch für bildgebende Anwendungen, welche Bilder zur Verfügung stellen, aus welchen die Mittellinie ebenfalls extrahiert beziehungsweise erfasst werden kann, herangezogen werden. Vorteilhaft ist also, wenn die Sensoreinrichtung möglichst viele verschiedene Sensoren umfasst, weiche dann ihren Vorteilen entsprechend eingesetzt werden können.

Ein erfindungsgemäßes Kraftfahrzeug, insbesondere ein Personenkraftwagen, umfasst ein erfindungsgemäßes Fahrerassistenzsystem.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Ausführungsbeispiele der Erfindung werden nachfolgend anhand schematischer Zeichnungen näher erläutert.

Dabei zeigen:
- Fig. 1: in schematischer Darstellung ein Ausführungsbeispiel eines erfindungsgemäßen Kraftfahrzeugs mit einem Fahrerassistenzsystem;
- Fig. 2: in schematischer Darstellung eine Parkfläche zum Abstellen des Kraftfahrzeugs in einer bestimmten Position und einer bestimmten Ausrichtung; und
- Fig. 3: in schematischer Darstellung die Parkfläche in einer angepassten Position und einer angepassten Ausrichtung.

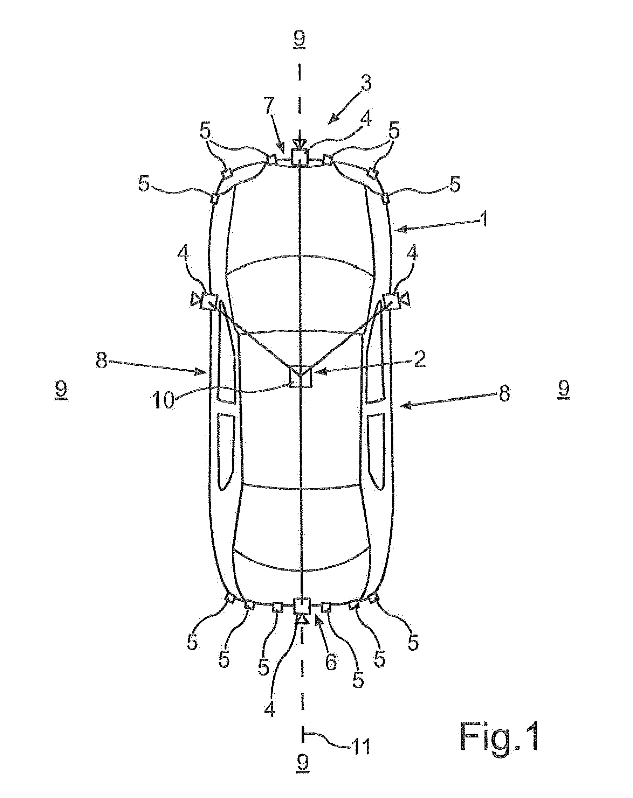

In Fig. 1 ist schematisch eine Draufsicht auf ein Kraftfahrzeug 1 mit einem Fahrerassistenzsystem 2 gemäß einer Ausführungsform der Erfindung dargestellt, Das Fahrerassistenzsystem 2 umfasst im Ausführungsbeispiel eine Sensoreinrichtung 3 mit einer Mehrzahl von Kameras 4 und einer Mehrzahl von Ultraschallsensoren 5. Gemäß dem Ausführungsbeispiel in Fig. 1 sind die Kameras 4 an einem Heck 6 des Kraftfahrzeugs 1, an einer Front 7 des Kraftfahrzeugs 1, sowie an einer jeweiligen Seite 8 des Kraftfahrzeugs 1 angeordnet. Die Anordnung der Kameras 4 ist jedoch vielfältig möglich, vorzugsweise allerdings so, dass ein Umgebungsbereich 9 des Kraftfahrzeugs 1 erfasst werden kann. Das Kraftfahrzeug 1 weist eine Fahrzeuglängsachse 11 auf, welche das Kraftfahrzeug in Längsrichtung symmetrisch durchläuft.

Die jeweiligen Kameras 4 können eine CMOS-Kamera oder aber eine CCD-Kamera oder eine beliebige Bilderfassungseinrichtung sein, welche Sensordaten von dem Umgebungsbereich 9 bereitstellen kann. Insbesondere sind die Kameras 4 Videokameras, welche kontinuierlich eine Bildsequenz von Bildern, also Sensordaten, bereitstellen. Die Kameras 4 weisen insbesondere eine entsprechende Bildverarbeitungseinheit auf, mit der Objekte 13 in dem Umgebungsbereich 9 des Kraftfahrzeugs 1 in den Bildern erfasst werden können.

Die Ultraschallsensoren 5 sind vorzugsweise an dem Heck 6 und an der Front 7 des Kraftfahrzeugs 1 angeordnet. Sie können aber ebenfalls vielfältig an dem Kraftfahrzeug 1 angeordnet sein. Gemäß dem Ausführungsbeispiel in Fig. 1 befinden sich sechs der Ultraschallsensoren 5 an der Front 7 und ebenfalls sechs der Ultraschallsensoren 5 an dem Heck 6. Die Ultraschallsensoren 5 können ein Ultraschallsignal aussenden, welches von zumindest einem Objekt 13 reflektiert wird. Anhand der Laufzeit des Ultraschallsignals kann der Abstand zu dem zumindest einen Objekt 13 bestimmt werden.

Weiterhin umfasst das Fahrerassistenzsystem 2 eine Auswerteeinrichtung 10, welche die Sensordaten von dem Umgebungsbereich 9, welche durch die Sensoreinrichtung 3 bereitgestellt sind, verarbeitet. Die Auswerteeinrichtung 10 ist gemäß dem Ausführungsbeispiel in Fig. 1 mittig in dem Kraftfahrzeug 1 angeordnet, dies ist jedoch nur schematisch zu verstehen, so ist die Anordnung der Auswerteeinrichtung 10 ebenfalls vielfältig in dem Kraftfahrzeug 1 möglich. Weiterhin ist das Fahrerassistenzsystem 2 bevorzugt dazu ausgelegt, die aktuelle Position des Kraftfahrzeugs 1 zu bestimmten. Zu diesem Zweck kann das Fahrerassistenzsystem 2 ein satellitengestütztes Positionsbestimmungssystem aufweisen. Es kann auch vorgesehen sein, dass die aktuelle Position des Kraftfahrzeugs 1 mittels Odometrie bestimmt wird. Hierzu kann die Radumdrehungszahl zumindest eines Rads des Kraftfahrzeugs 1 und ein Lenkwinkel des Kraftfahrzeugs 1 erfasst werden.

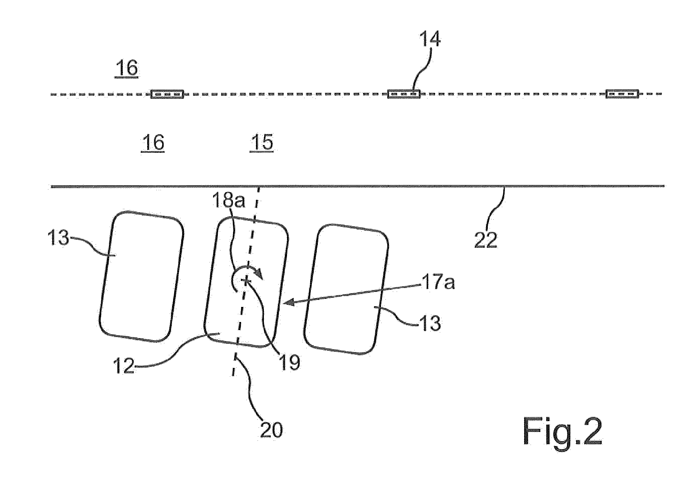

In Fig. 2 ist eine Draufsicht auf eine Parkfläche 12 gezeigt. Die Parkfläche 12 dient zu Abstellen bzw. Parken des Kraftfahrzeugs 1. Die Parkfläche 12 wird vorliegend von zwei Objekten 13 begrenzt. Die Objekte 13 können beispielsweise weitere Kraftfahrzeuge oder Parkflächenmarkierungen sein. Weiterhin zeigt Fig. 2 eine Mittellinie 14 einer an die Parkfläche 12 angrenzenden Fahrbahn 15. Die Fahrbahn 15 weist zwei Fahrspuren 16 auf.

Fährt das Kraftfahrzeug 1 nun beispielsweise auf der Fahrbahn 15 an der Parkfläche 12 vorbei, um mittels der Sensoreinrichtung 3 Sensordaten von dem Umgebungsbereich 9 des Kraftfahrzeugs 1 bereitzustellen, kann anhand der Sensordaten mittels der Auswerteeinrichtung 10 zumindest eines der Objekt 13 erfasst werden und eine räumliche Anordnung des zumindest einen Objekts 13 bezüglich des Kraftfahrzeugs 1 ermittelt werden. Relativ zu dem zumindest einen erfassten Objekt 13 wird eine Position 17a und/oder eine Ausrichtung 18a der Parkfläche 12 bestimmt. Die Position 17a kann beispielsweise anhand eines Mittelpunktes 19 der Parkfläche 12 zu dem Kraftfahrzeug 1 festgelegt werden.

Durch die Position 17a kann jedoch noch nicht die Ausrichtung 18a beziehungsweise eine Orientierung der Parkfläche 12 bestimmt werden. Die Ausrichtung 18a der Parkfläche 12 wird also üblicherweise anhand der Objekte 13 bestimmt. Allerdings kann der Fall auftreten, dass die Objekte 13 die Ausrichtung 18a derart vorgeben, dass die Ausrichtung 18a nicht mit der ursprünglich für die Parkfläche 12 vorgesehenen Ausrichtung 18a übereinstimmt beziehungsweise von dieser abweicht. So kann es beispielsweise der Fall sein, falls die Objekte 13 weitere Kraftfahrzeuge sind und diese ungenau auf zu der Parkfläche 12 benachbarten Parkflächen abgestellt sind. In dem vorliegenden Fall sind die Objekte 13 jeweils schräg zu den vorgesehenen Parkflächen, die senkrecht zu der Fahrtrichtung der Fahrbahn 15 verlaufen, angeordnet. Auch kann die Position 17a der Parkfläche 12 von den Objekten 13 beeinflusst sein.

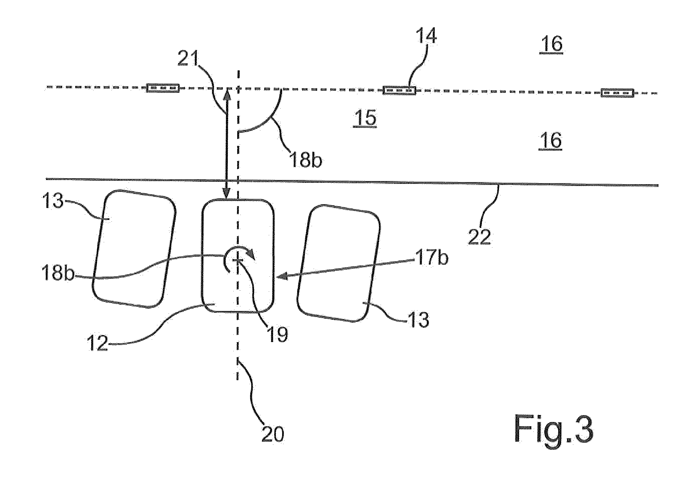

In Fig. 3 ist veranschaulicht, wie die Position 17a und die Ausrichtung 18a abhängig von der erfassten Mittellinie 14 angepasst werden und sich dadurch die angepasste Position 17b und die angepasste Ausrichtung 18b ergibt. So ist es gemäß der Ausführungsform vorgesehen, dass die Mittellinie 14 kontinuierlich während des Einparkvorgangs des Kraftfahrzeugs 1 mittels der Sensoreinrichtung 3 erfasst wird und die zuvor bestimmte Position 17a und die zuvor bestimmte Ausrichtung 18a der Parkfläche 12 anhand der Mittellinie 14 zu einer angepassten Position 17b und einer angepassten Ausrichtung 18b angepasst werden. Die Mittellinie 14 kann beispielsweise in einem Bild, welches von der Kamera 4 aufgenommen ist, mit Techniken der Bildverarbeitung erfasst beziehungsweise detektiert werden.

In Fig. 3 ist beispielsweise die Parkfläche 12 zum Querparken des Kraftfahrzeugs 1 dargestellt. In diesem Fall ist es vorgesehen, dass eine Haupterstreckungsrichtung 20 der Parkfläche 12 senkrecht zu der erfassten Mittellinie 14 angeordnet ist. In dem Fall der Parkfläche 12 zum Längsparken wäre die Haupterstreckungsrichtung 20 parallel beziehungsweise im Wesentlichen parallel zu der erfassten Mittellinie angeordnet.

Eine Fahrtrajektorie, entlang welcher das Kraftfahrzeug 1 beim Einparken in die Parkfläche 12 bewegt wird, wird ebenfalls abhängig von der angepassten Position 17b und/oder der angepassten Ausrichtung 18b angepasst. Die Fahrtrajektorie wird also so angepasst, dass beim Abstellen des Kraftfahrzeugs 1 auf der Parkfläche 12 beziehungsweise dem Erreichen einer Zielposition des Kraftfahrzeugs 1 die Fahrzeuglängsachse 11 im Wesentlichen deckungsgleich mit der Haupterstreckungsrichtung 20 ist.

Das Kraftfahrzeug 1 kann entlang der Fahrtrajektorie semi-autonom manövriert werden. In diesem Fall übernimmt das Fahrerassistenzsystem 2 den Eingriff in die Lenkung und der Fahrer betätigt das Gaspedal und die Bremse. Es kann auch vorgesehen sein, dass das Kraftfahrzeug 1 autonom entlang der Fahrtrajektorie manövriert wird. Hierbei steuert das Fahrerassistenzsystem 2 auch eine Antriebseinrichtung und eine Bremseinrichtung des Kraftfahrzeugs 1 an.

In Fig. 3 ist ebenfalls gezeigt, wie gemäß des Ausführungsbeispiels, die angepasste Position 17b in Abhängigkeit von einem vorbestimmten Abstand 21 zu der erfassten Mittellinie 14 vorgesehen ist. Dies ist ebenfalls kontinuierlich vorgesehen, sodass die Position 17b kontinuierlich während des Einparkvorgangs abhängig von dem Abstand 21 angepasst wird.

Ergänzend oder alternativ kann vorgesehen sein, dass eine seitliche Begrenzungslinie 22 zusätzlich zum Anpassen der Position 17a und/oder der Ausrichtung 18a herangezogen wird. Die seitliche Begrenzungslinie 22 verläuft üblicherweise parallel zu der Mittellinie 14 und kann dadurch das Anpassen der Position 17a und/oder der Ausrichtung 18a unterstützen. In dem Fall der Parkfläche 12 zum Querparken kann also beispielsweise auch ein Lot der Haupterstreckungsrichtung 20 auf die seitliche Begrenzungslinie 22 gefällt werden, um die Ausrichtung 18a anzupassen.

Weiterhin kann es vorgesehen sein, dass die Sensoreinrichtung 3 einen Laserscanner und/oder einen LiDAR-Sensor und/oder einen Radarsensor umfasst, um die Sensordaten bereitzustellen. So eignen sich beispielsweise der Ultraschallsensor 5 und/oder der Laserscanner und/oder der LiDAR-Sensor und/oder der Radarsensor gut, um die räumliche Anordnung des zumindest einen Objekts 13 bezüglich des Kraftfahrzeugs zu ermitteln. Weiterhin eignet sich die Kamera 4 dazu, die Mittellinie 14 und/oder die Begrenzungslinie 22 zu erfassen.

## Patentansprüche

1. Verfahren zum Bestimmen einer Parkfläche (12) zum Abstellen eines Kraftfahrzeugs (1) in einem Umgebungsbereich (9) des Kraftfahrzeugs (1) mit den Schritten:
- Bereitstellen von Sensordaten von dem Umgebungsbereich (9) mittels zumindest einer Sensoreinrichtung (3) des Kraftfahrzeugs (1),
- Erfassen von zumindest einem Objekt (13) in dem Umgebungsbereich (9) sowie Ermitteln einer räumlichen Anordnung des zumindest einem Objekts (13) bezüglich des Kraftfahrzeugs (1) anhand der Sensordaten mittels einer Auswerteeinrichtung (10) des Kraftfahrzeugs (1), und
- Bestimmen einer Position (17a) und/oder einer Ausrichtung (18a) der Parkfläche (12) anhand der ermittelten räumlichen Anordnung des zumindest einen Objekts (13) mittels der Auswerteeinrichtung (10),
**gekennzeichnet durch**
- Erfassen einer Mittellinie (14) einer an die Parkfläche (12) angrenzenden Fahrbahn (15) und
- Anpassen der bestimmten Position (17a) und/oder der bestimmten Ausrichtung (18a) der Parkfläche (12) in Abhängigkeit von der erfassten Mittellinie (14).

2. Verfahren nach Anspruch 1,
**dadurch gekennzeichnet, dass**
eine relative Lage der Mittellinie (14) zu der Parkfläche (12) ermittelt wird und die bestimmte Position (17a) und/oder die bestimmte Ausrichtung (18a) der Parkfläche (12) anhand der ermittelten relativen Lage angepasst wird.

3. Verfahren nach Anspruch 1 oder 2,
**dadurch gekennzeichnet, dass**
die räumliche Anordnung des zumindest einen Objekts (13) und/oder die Mittellinie (14) kontinuierlich während eines Einparkvorgangs des Kraftfahrzeuges (1) in die Parkfläche (12) erfasst werden.

4. Verfahren nach einem der vorhergehenden Ansprüche,
**dadurch gekennzeichnet, dass**
das Bestimmen der Position (17a) und/oder der Ausrichtung (18a) der Parkfläche (12) kontinuierlich während eines Einparkvorgangs des Kraftfahrzeuges (1) in die Parkfläche (12) angepasst wird.

5. Verfahren nach einem der vorhergehenden Ansprüche,
**dadurch gekennzeichnet, dass**
eine Fahrtrajektorie, entlang welcher das Kraftfahrzeug (1) beim Einparken in die Parkfläche (12) bewegt wird, bestimmt wird und die bestimmte Fahrtrajektorie abhängig von der angepassten Position (17b) und/oder der angepassten Ausrichtung (18b) angepasst wird.

6. Verfahren nach einem der vorhergehenden Ansprüche,
**dadurch gekennzeichnet, dass**
die Parkfläche (12) zum Längsparken des Kraftfahrzeugs (1) dient und die Ausrichtung (18a) der Parkfläche (12) derart angepasst wird, dass eine Haupterstreckungsrichtung (20) der Parkfläche (12) im Wesentlichen parallel zu der erfassten Mittellinie (14) angeordnet ist.

7. Verfahren nach einem der vorhergehenden Ansprüche,
**dadurch gekennzeichnet, dass**
die Parkfläche (12) zum Querparken des Kraftfahrzeugs (1) dient und die Ausrichtung (18a) der Parkfläche (12) derart angepasst wird, dass eine Haupterstreckungsrichtung (20) der Parkfläche (12) im Wesentlichen senkrecht zu der erfassten Mittellinie (14) angeordnet ist.

8. Verfahren nach einem der vorhergehenden Ansprüche,
**dadurch gekennzeichnet, dass**
die Position (12) der Parkfläche (12) in Abhängigkeit von einem vorbestimmten Abstand (21) zu der erfassten Mittellinie (14) angepasst wird.

9. Verfahren nach einem der vorhergehenden Ansprüche,
**dadurch gekennzeichnet, dass**
als die Mittellinie (14) eine auf die Fahrbahn (15) aufgebrachte Fahrbahnmarkierung, welche eine unterbrochene Linie oder eine durchgezogene Linie darstellt, erfasst wird.

10. Verfahren nach einem der vorhergehenden Ansprüche,
**dadurch gekennzeichnet, dass**
als die Mittellinie (14) eine auf die Fahrbahn (15) aufgebrachte Fahrbahnmarkierung, welche zumindest zwei Fahrspuren (16) der Fahrbahn (15) voneinander trennt, erfasst wird.

11. Verfahren nach einem der vorhergehenden Ansprüche,
**dadurch gekennzeichnet, dass**
eine seitlichen Begrenzungslinie (22) der an die Parkfläche (12) angrenzenden Fahrbahn (15) erfasst wird und die Position (17a) und/oder die Ausrichtung (18a) der Parkfläche (12) zusätzlich abhängig von der erfassten Begrenzungslinie (22) angepasst wird.

12. Fahrerassistenzsystem (2) für ein Kraftfahrzeug (1) mit zumindest einer Sensoreinrichtung (3) und mit einer Auswerteeinrichtung (10), welche dazu ausgelegt ist ein Verfahren nach einem der vorhergehenden Ansprüche auszuführen.

13. Fahrerassistenzsystem (2) nach Anspruch 12
**dadurch gekennzeichnet, dass**
die Sensoreinrichtung (3) einen Ultraschallsensor (5) und/oder eine Kamera (4) und/oder einen Laserscanner und/oder einen Radarsensor umfasst.

14. Kraftfahrzeug (1) mit einem Fahrerassistenzsystem (2) nach Anspruch 12 oder 13.
